# EUROPÄISCHE PATENTSCHRIFT

(11) **EP 2 474 451 B1**
(45) Veröffentlichungstag und Bekanntmachung des Hinweises auf die Patenterteilung: **01.10.2014**
(21) Anmeldenummer: 12161736.9
(22) Anmeldetag: 04.12.2002
(51) Int. Cl.: B60R 11/04

(54) **Stereo-Kamera-Anordnung in einem Kraftfahrzeug**
Stereo camera arrangement in a vehicle
Implantation d'une caméra stereo dans un véhicule

(30) Priorität: 20.12.2001 DE 10162652
(43) Veröffentlichungstag der Anmeldung: 11.07.2012
(62) Teilanmeldung aus: 02787416.3
(73) Patentinhaber: Robert Bosch GmbH, 70442 Stuttgart (DE)
(72) Erfinder: Seger, Ulrich, 71229 Leonberg-Warmbronn (DE); Apel, Uwe, 72666 Neckartailfingen (DE)

(56) Entgegenhaltungen:
- EP-A- 1 087 257
- DE-A1- 10 010 434
- DE-C1- 19 647 200
- JP-A- 4 194 827
- US-A- 5 096 287
- PATENT ABSTRACTS OF JAPAN Bd. 2000, Nr. 21, 3. August 2001 (2001-08-03) & JP 2001, 094842, A, (FUJI HEAVY IND LTD), 6. April 2001 (2001-04-06)
- PATENT ABSTRACTS OF JAPAN Bd. 1999, Nr. 8, 30. Juni 1999 (1999-06-30) & JP 11, 078737, A, (HONDA MOTOR CO LTD), 23. März 1999 (1999-03-23)

## Beschreibung

### Stand der Technik

Die Erfindung betrifft eine Stereo-Kamera-Anordnung in einem Kraftfahrzeug, insbesondere zur Klassifizierung von Objekten.

Für die Klassifizierung von Objekten auf einer Fahrbahn, die Zuordnung von Attributen zu den Objekten sowie der Bestimmung des Abstandes der Objekte von einem Kraftfahrzeug werden Stereo-Kamera-Systeme bzw. Stereo-Front-Kamera-Systeme (SFK-Systeme) verwendet, bei denen in dem Kraftfahrzeug zwei im allgemeinen zueinander parallele Kamera-Module angebracht werden, die durch die Windschutzscheibe den Fahrbahnbereich vor dem Kraftfahrzeug erfassen. Für eine erforderliche Genauigkeit bei der Entfernungsbestimmung von Konturen im Stereo-Video-Bild für Entfernungen bis zu größer/gleich 40 m müssen die relativen Positionen der Konturen auf den elektronischen Bildaufnahmechips bis in den Mikrometer-Bereich aufgelöst werden. Hierfür muß die relative Positionierung der beiden Kameras zueinander sehr genau und stabil erfolgen; weiterhin muß auch die Position des Kamerasystems zum Fahrzeug genau und zeitlich stabil definiert sein.

Herkömmlicherweise wird hierzu ein Halter, zum Beispiel als Druckgussteil aus Aluminium oder Magnesium, in der Dachkonstruktion des Fahrzeuges montiert, der in Aufnahmebereichen die Kamera-Module und in einem Zentralbereich die Steuer- und Auswerteelektronik hierfür aufnimmt. Der Träger dichtet weiterhin den optischen Pfad der Kameras gegen Verschmutzung sowie Streulicht ab und ermöglicht eine fertigungstechnisch einfachere Montage des Kamera-Systems.

Bei derartigen herkömmlichen Stereo-Kamera-Anordnungen in einem Kraftfahrzeug sind jedoch Abstandsveränderungen der Kamera-Module zueinander und zu dem Kraftfahrzeug problematisch. Langsam verlaufende Abstandsveränderungen, zum Beispiel durch die thermische Ausdehnung des Trägers, können überwiegend noch durch Nachführen der Bildkorrekturdaten ausgeglichen werden. Hierzu können die erforderlichen Meßgrößen durch eine separate Sensorik erfaßt werden oder direkt aus dem Bildverarbeitungssystem ermittelt werden.

Kurzfristige Abstandsänderungen, die zum Beispiel durch Schwingungen in den Träger eingekoppelt werden, können hingegen im Allgemeinen nicht korrigiert werden. Das Trägersystem muß daher eine sehr große Steifigkeit gegen alle Schwingungen unterhalb der Videofrequenz - je nach System im Allgemeinen 30 Hz - 100 Hz - aufweisen. Die steifere Ausbildung des Trägers führt jedoch im Allgemeinen zu höheren Herstellungskosten und einem höheren Gesamtgewicht und ermöglicht dennoch keine hinreichende Unterdrückung der Schwingungen.

Die DE-A-10010434 zeigt ein Kraftfahrzeug, bei dem eine Stereo- Kameraanordnung in einer Bremswarnleuchte vorgesehen ist. Die Bremswarnleuchte wird an die Innenseite der Heckscheibe geklebt. Die beiden Kameras der Kameraanordnung sind an seitlichen Randbereichen neben einer leuchtenden Fläche der Bremswarnleuchte vorgesehen.

Das Gehäuse der Kameraanordnung kann in Randbereichen, die jeweils oberhalb und unterhalb an ein Objektiv angrenzen, an der Innenseite der Heckscheibe festgeklebt sein.

### Offenbarung der Erfindung

Die erfindungsgemäße Stereo-Kamera-Anordnung nach Anspruch 1 weist demgegenüber insbesondere den Vorteil auf, dass eine sichere und genaue Einstellung der Position der Kamera-Module, insbesondere ihrer relativen Position zueinander, mit relativ geringem Aufwand und vorteilhafterweise geringen Herstellungskosten, geringer Masse und geringem Platzbedarf möglich ist. Die Unteransprüche beschreiben bevorzugte Weiterbildungen.

Der Erfindung liegt der Gedanke zugrunde, die hohe Verwindungssteifigkeit oder sogar Verwindungsfreiheit der Windschutzscheibe für eine stabile Ausrichtung der Kamera-Module des Stereo-Kamera-Systems auszunutzen. Hierfür werden die Kamera-Module in einer Halterung aufgenommen, die direkt an der Innenseite der Windschutzscheibe festgeklebt wird, wobei diese Klebung in Klebebereichen ringförmig um die Vorlinsenräume herum erfolgt. Durch diese Befestigung ist die Einkopplung von Schwingungen der Blechteile der Karosserie in das Kamera-System zumindest stark unterdrückt. Vorteilhafterweise ist die Halterung hierbei frei von einer mechanischen Verbindung zu dem Fahrzeugdach. Eine Abdeckung bzw. Abdichtung des Sensorsystems gegenüber dem restlichen Fahrzeuginnenraum kann hierbei zum Beispiel über eine zusätzliche, zwischen der Windschutzscheibe und einem Dachbereich angebrachte Abdeckung erfolgen, die mit der Halterung nicht Kontakt steht. Zwischen den Kamera-Modulen und einer Steuereinrichtung zur Steuerung und ggf. Auswertung sind Daten- und Stromversorgungsleitungen vorgesehen. Die Steuereinrichtung kann hierbei in einem eigenständigen Gehäuse im Fahrzeugdach befestigt sein, so dass die Gesamtmasse des an die Windschutzscheibe geklebten Kamera-Systems gering ist. Die Einkopplung von Schwingungen über die Daten- und Stromversorgungsleitungen sind hierbei vernachlässigbar und kann durch Verwendung flexibler Leitungen minimiert werden.

Gemäß einer bevorzugten Ausführungsform ist die Verwendung einer Halterung mit zwei separaten Halteteilen vorgesehen, die jeweils ein Kamera-Modul umgeben und an der Windschutzscheibe durch Klebung befestigt sind. Die Halteteile dichten hierbei den Vorlinsenraum zwischen den Kamera-Modulen und der Windschutzscheibe ab und können zum Beispiel mit einem automatisierten Handhabungsverfahren justiert an der Windschutzscheibe festgeklebt werden.

Gemäß einer alternativen Ausführungsform ist eine einteilige Halterung vorgesehen, so dass der relative Abstand der beiden Kamera-Module zueinander durch die starre Ausbildung der Halterung vorgegeben und fest ist. Hierbei weist das Material der Halterung vorteilhafterweise einen ähnlichen Wärmeausdehnungskoeffizienten wie das Glasmaterial der Windschutzscheibe auf, so dass die Ausbildung von Spannungen und ein Ablösen der Klebeverbindung verhindert wird. Dieses Material kann insbesondere ein Kunststoffmaterial sein, das vorteilhafterweise ein geringes Gewicht aufweist und somit die Gesamtmasse des an der Windschutzscheibe festgeklebten Kamera-Systems nicht wesentlich erhöht.

Um die Ausbildung allzu hoher Druckunterschiede zwischen dem Vorlinsenraum innerhalb der Halterung und dem umgebenden Kamerabereich der Abdeckung zu verhindern, kann bei sämtlichen Ausführungsformen eine Druckausgleichsvorrichtung in der Halterung vorgesehen sein. Diese kann zum Beispiel durch einen elastischen, zum Beispiel balgartigen Bereich, oder vorteilhafterweise durch einen gasdurchlässigen und dampf- und schmutzundurchlässigen Bereich, zum Beispiel eine semi-permeable Membran aus geeignetem Textilmaterial, zum Beispiel Mikrofasermaterial, gebildet werden.

Erfindungsgemäß kann insbesondere eine lebenslange Abdichtung des Vorlinsenraums gegen Partikel und Feuchtigkeit und eine Abschirmung von Streulicht erreicht werden.

Die mechanische Beanspruchung der Klebeflächen zwischen der Halterung und der Windschutzscheibe durch Karosserieverwindungen, die bei Verwendung eines steifen, im Dachbereich montierten Trägersystems auftreten, entfallen bei der erfindungsgemäßen Anordnung.

Erfindungsgemäß wird hierbei eine schnelle, einfache und sichere Montage ermöglicht, indem die Kamera-Module zunächst in die Halterung eingesetzt werden. Hierzu kann zum Beispiel ein Einrastmechanismus bzw. Snap-Fit-Mechanismus zur Aufnahme der Kamera-Module, zum Beispiel in ihrem Objektivbereich, in der Halterung vorgesehen sein, um eine sichere Positionierung und feste Aufnahme zu gewährleisten. Die Halterung mit den aufgenommenen Kamera-Modulen wird anschließend an die Innenseite der Windschutzscheibe geklebt. Diese Schritte können unmittelbar nach der Herstellung der Windschutzscheibe, zum Beispiel in der Fertigungsstätte der Windschutzscheibe, durchgeführt werden, so dass die Windschutzscheibe mitsamt dem aus Kamera-Modulen und Halterung bestehenden Kamera-System als eine Baueinheit geliefert werden kann. Nach Einsetzen der Windschutzscheibe in die Karosserie erfolgt der elektrische Anschluß der Kamera-Module, insbesondere die Datenverbindung über eine flexible Datenleitung mit der Steuereinrichtung, und die Anbringung der Abdeckung zwischen Windschutzscheibe und Dachbereich.

Kurze Beschreibung der Zeichnungen
Fig. 1 einen Längsschnitt durch eine Stereo-Kamera-Anordnung gemäß einer Ausführungsform der Erfindung;
Fig. 2 einen Querschnitt durch die Anordnung von Fig. 1;
Fig. 3 eine perspektivische Ansicht einer erfindungsgemäßen Halterung.

### Ausführungsformen der Erfindung

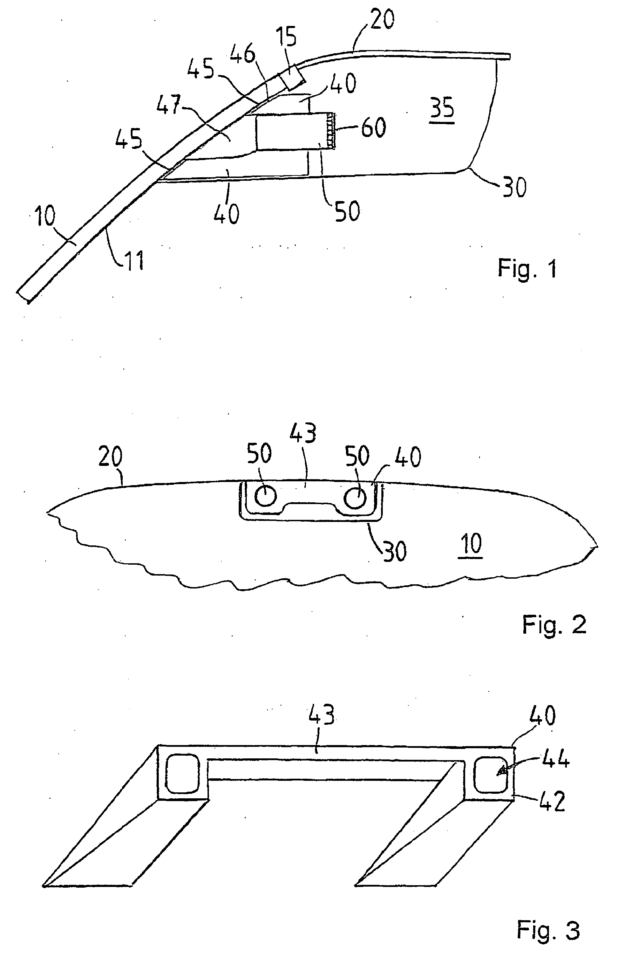

In Fig. 1 ist als Ausschnitt aus einem Kraftfahrzeug ein oberer Bereich der Windschutzscheibe 10 gezeigt, der über eine Dichtung 15 mit einem Dachabschnitt 20 des Kraftfahrzeuges verbunden ist. Eine Abdeckung 30 ist zwischen einer Innenseite 11 der Windschutzscheibe 10 und dem Dachabschnitt 20 vorgesehen und schließt einen Kamerabereich 35 ein. In dem Kamerabereich 35 ist eine Halterung 40 vorgesehen, die in Klebebereichen 45 mittels einer Klebeschicht 46 an der Innenseite 11 der Windschutzscheibe 10 befestigt ist. Gemäß Fig. 1, 2 liegt die Halterung 40 nicht an der Abdeckung 30 an. Die Halterung 40 nimmt zwei zueinander im wesentlichen parallele Kamera-Module 50 in einem vorgegebenen Abstand auf, wobei zwischen jeden Kamera-Modul 50 und der Windschutzscheibe 10 ein Vorlinsenraum 47 ausgebildet ist, um den optischen Pfad vor den Kamera-Modulen nicht zu beeinflussen. Die Klebebereiche 45 erstrecken sich vorteilhafterweise ringförmig um die Vorlinsenräume 47, so dass die Halterung 40 die Kamera-Module nach unten und zu den Seiten hin abdeckt und somit Streulicht von den Kamera-Modulen 50 fernhält. Gemäß Fig. 2, 3 kann die Halterung hierzu geschlossene Aufnahmen 42 aufweisen, in denen gemäß Fig. 2 eine runde Ausnehmung oder gemäß Fig. 3 eine rechteckige Ausnehmung 44 zur sicheren Aufnahme der Kamera-Module ausgebildet ist. Die seitliche Positionierung der Aufnahmen 42 zueinander wird durch den Querträger 43 sichergestellt. Die Vorderseite des Querträgers 43 kann hierbei auch als Klebebereich zur Befestigung an der Innenseite 11 der Windschutzscheibe 10 dienen. Die Ausnehmungen in der Halterung 40 können gemäß Fig. 1 in Längsrichtung mit gleichbleibendem Querschnitt oder gemäß Fig. 3 mit sich verjüngendem Querschnitt zur Fixierung der Kamera-Module 50 in Längsrichtung ausgebildet sein.

Die Stromversorgung der Kamera-Module 50 und die Aufnahme der Daten der Kamera-Module 50 erfolgt über eine oder zwei Leiterplatten 60 an der Rückseite der Kamera-Module 50, wobei von den Leiterplatten 60 nicht gezeigte flexible Kabel für die Stromversorgung und die Datenleitung zu einer Steuereinrichtung außerhalb der Abdeckung 30 verlaufen.

## Patentansprüche

1. Stereo-Kamera-Anordnung in einem Kraftfahrzeug, insbesondere zur Klassifizierung von Objekten, mit
mindestens zwei Kamera-Modulen (50),
einer Halterung (40), in der die Kamera-Module (50) mit einem vorgegebenen seitlichen Abstand zueinander aufgenommen sind,
wobei die Halterung (40) an einer Innenseite (11) einer Fahrzeugscheibe (10) festgeklebt ist,
wobei zwischen den Kamera-Modulen (50) und der Fahrzeugscheibe (10) Vorlinsenräume (47) ausgebildet sind, und
wobei die Halterung (40) Klebebereichen (45) um die Vorlinsenräume (47) herum an der Innenseite (11) festgeklebt ist,
**dadurch gekennzeichnet, dass**
die Fahrzeugscheibe (10) eine Windschutzscheibe (10) ist, und
die Klebebereiche (45) sich ringförmig um die Vorlinsenräume (47) herum erstrecken und die Halterung (40) die Kamera-Module (50) nach unten und zu den Seiten hin abdeckt und somit Streulicht von den Kamera-Modulen (50) abschirmt.

2. Stereo-Kamera-Anordnung nach Anspruch 1, **dadurch gekennzeichnet, dass** die Halterung (40) zwei voneinander getrennte Halteteile aufweist, die jeweils eines der Kamera-Module (50) aufnehmen und in vorgegebenem seitlichem Abstand zueinander an der Innenseite (11) der Windschutzscheibe (10) festgeklebt sind, wobei die Halteteile jeweils den Vorlinsenraum (47) zwischen den Kamera-Modulen (50) und der Windschutzscheibe (10) abdichten.

3. Stereo-Kamera-Anordnung nach Anspruch 1, **dadurch gekennzeichnet, dass** die Halterung einteilig ausgebildet ist und zwei Aufnahmebereiche (42) aufweist, die jeweils eines der Kamera-Module (50) aufnehmen und durch einen Querträger (43) starr miteinander verbunden sind.

4. Stereo-Kamera-Anordnung nach einem der vorherigen Ansprüche, **dadurch gekennzeichnet, dass** die Halterung (40) geschlossene Aufnahmen (42) aufweist, in denen eine z. B. runde oder rechteckige Ausnehmung (44) zur sicheren Aufnahme der Kamera-Module (50) ausgebildet ist.

5. Stereo-Kamera-Anordnung nach einem der vorherigen Ansprüche, **dadurch gekennzeichnet, dass** sie eine lebenslange Abdichtung des Vorlinsenraums (47) gegen Partikel und Feuchtigkeit aufweist.

6. Stereo-Kamera-Anordnung nach einem der vorherigen Ansprüche, **dadurch gekennzeichnet, dass** die Kamera-Module (50) durch einen Montage-Träger miteinander verbunden sind, der von der Halterung (40) getrennt ausgebildet ist.

7. Stereo-Kamera-Anordnung nach einem der vorherigen Ansprüche, **dadurch gekennzeichnet, dass** das Material der Halterung (40), vorzugsweise ein Kunststoffmaterial, einen Wärmeausdehnungskoeffizienten aufweist, der dem Wärmeausdehnungskoeffizienten der Windschutzscheibe (10) im Wesentlichen entspricht.

8. Stereo-Kamera-Anordnung nach einem der vorherigen Ansprüche, **dadurch gekennzeichnet, dass** Anlageflächen der Halterung (40) an der Innenseite (11) der Windschutzscheibe (10) abgedichtet sind, vorzugsweise durch eine dauerelastische Dichtung.

9. Stereo-Kamera-Anordnung nach einem der vorherigen Ansprüche, **dadurch gekennzeichnet, dass** in der Halterung (40) eine Druckausgleichseinrichtung zum Druckausgleich der Vorlinsenräume (47) gegenüber einem umgebenen Raum, vorzugsweise dem Kamerabereich (35), vorgesehen ist.

10. Stereo-Kamera-Anordnung nach Anspruch 9, **dadurch gekennzeichnet, dass** in der Druckausgleichseinrichtung semi-permeable Bereiche, vorzugsweise aus einem luftdurchlässigen und dampfundurchlässigen Material, zum Beispiel einem Mikrofaser-Textilmaterial, vorgesehen sind.

11. Stereo-Kamera-Anordnung nach einem der vorherigen Ansprüche, **dadurch gekennzeichnet, dass** an der Rückseite der Kamera-Module (50) eine Leiterplatte (60) zur Datenaufnahme und Stromversorgung der Kamera-Module (50) vorgesehen ist.

12. Stereo-Kamera-Anordnung nach einem der vorherigen Ansprüche, **dadurch gekennzeichnet, dass** von den Kamera-Modulen (50) oder der Leiterplatte (60) eine Datenleitung zu einer von der Halterung (40) getrennt angebrachten Steuereinrichtung vorgesehen ist.

13. Stereo-Kamera-Anordnung nach einem der vorherigen Ansprüche, **dadurch gekennzeichnet, dass** ein Einrastmechanismus zur positionsfesten Aufnahme der Kamera-Module (50), vorzugsweise eines Objektivbereiches der Kamera-Module (50), in der Halterung (40) vorgesehen ist.

14. Verfahren zum Herstellen einer Stereo-Kamera-Anordnung nach einem der vorherigen Ansprüche **dadurch gekennzeichnet, dass**
die Kamera-Module (50) in die Halterung (40) eingesetzt werden, und
die Halterung (40) derartig in Klebebereichen (45) an der Innenseite (11) der Windschutzscheibe (10) festgeklebt wird, dass zwischen den Kamera-Modulen (50) und der Windschutzscheibe (10) Vorlinsenräume (47) ausgebildet werden und die Klebebereiche um die Vorlinsenräume (47) herum verlaufen,
wobei die Klebebereiche (45) sich ringförmig um die Vorlinsenräume (47) erstrecken und die Halterung (40) die Kamera-Module (50) nach unten und zu den Seiten hin abdeckt und somit Streulicht von den Kamera-Modulen (50) abschirmt.

## Claims

1. Stereo camera arrangement in a motor vehicle, in particular for the classification of objects, comprising:
at least two camera modules (50),
a mount (40), in which the camera modules (50) are held at a preselected lateral distance apart,
the mount (40) being cemented to an inside (11) of a vehicle window (10),
in-front-of-lens spaces (47) being formed between the camera modules (50) and the vehicle window (10), and
the mount (40) being cemented on the inside (11) in cementing regions (45) around the in-front-of-lens spaces (47),
**characterized in that**
the vehicle window (10) is a windscreen (10), and
the cementing regions (45) extend annularly around the in-front-of-lens spaces (47) and the mount (40) covers the camera modules (50) downwards and to the sides, and thereby shields the camera modules (50) from stray light.

2. Stereo camera arrangement according to Claim 1, **characterized in that** the mount (40) has two holding parts separate from one another, each of which holds one of the camera modules (50) and is cemented to the inside (11) of the windscreen (10) at a preselected lateral distance from the other, the holding parts respectively sealing off the in-front-of-lens space (47) between the camera modules (50) and the windscreen (10).

3. Stereo camera arrangement according to Claim 1, **characterized in that** the mount is formed as one part and has two receiving regions (42), which each holds one of the camera modules (50) and is rigidly connected to the other by a crosspiece (43).

4. Stereo camera arrangement according to one of the preceding claims, **characterized in that** the mount (40) has closed receptacles (42), in which there is formed a recess (44), for example a round or rectangular recess, for securely holding the camera modules (50).

5. Stereo camera arrangement according to one of the preceding claims, **characterized in that** it has a lifetime seal of the in-front-of-lens space (47) with respect to particles and moisture.

6. Stereo camera arrangement according to one of the preceding claims, **characterized in that** the camera modules (50) are connected to one another by a mounting support, which is formed separately from the mount (40).

7. Stereo camera arrangement according to one of the preceding claims, **characterized in that** the material of the mount (40), preferably a plastics material, has a coefficient of thermal expansion that substantially corresponds to the coefficient of thermal expansion of the windscreen (10).

8. Stereo camera arrangement according to one of the preceding claims, **characterized in that** abutting surfaces of the mount (40) on the inside (11) of the windscreen (10) are sealed, preferably by a permanently elastic seal.

9. Stereo camera arrangement according to one of the preceding claims, **characterized in that** a pressure equalizing device for equalizing the pressure of the in-front-of-lens spaces (47) with respect to a surrounding space, preferably the camera region (35), is provided in the mount (40).

10. Stereo camera arrangement according to Claim 9, **characterized in that** semipermeable regions, preferably of an air-permeable and vapour-impermeable material, for example a microfibre textile material, are provided in the pressure equalizing device.

11. Stereo camera arrangement according to one of the preceding claims, **characterized in that** a printed circuit board (60) for recording data from and supplying power to the camera modules (50) is provided on the rear side of the camera modules (50).

12. Stereo camera arrangement according to one of the preceding claims, **characterized in that** a data line is provided from the camera modules (50) or the printed circuit board (60) to a control device attached separately from the mount (40).

13. Stereo camera arrangement according to one of the preceding claims, **characterized in that** a snap-mechanism for positionally fixed holding of the camera modules (50), preferably a lens region of the camera modules (50), is provided in the mount (40).

14. Method for producing a stereo camera arrangement according to one of the preceding claims,
**characterized in that**
the camera modules (50) are inserted into the mount (40), and
the mount (40) is cemented to the inside (11) of the windscreen (10) in cementing regions (45) in such a way that in-front-of-lens spaces (47) are formed between the camera modules (50) and the windscreen (10) and the cementing regions run around the in-front-of-lens spaces (47),
the cementing regions (45) extending annularly around the in-front-of-lens spaces (47) and the mount (40) covering the camera modules (50) downwards and to the sides, and thereby shielding the camera modules (50) from stray light.

## Revendications

1. Ensemble de caméra stéréo pour véhicule automobile, en particulier destiné à la classification d'objets et présentant
au moins deux modules de caméra (50),
un support (40) dans lequel les modules de caméra (50) sont logés à distance mutuelle prédéterminée dans le sens latéral,
le support (40) étant collé sur le côté intérieur (11) d'une vitre (10) du véhicule,
des espaces (47) pour pré-lentilles étant formés entre les modules de caméra (50) et le vitre (10) du véhicule et
le support (40) étant fixé sur le côté intérieur (11) sur des zones adhésives (45) disposées autour des espaces (47) pour pré-lentilles,
**caractérisé en ce que**
la vitre (10) du véhicule est la vitre (10) du pare-brise et
**en ce que** les zones adhésives (45) s'étendent en anneau autour des espaces (47) pour pré-lentilles et le support (40) recouvre les modules de caméra (50) vers le bas et les côtés et fait ainsi écran à la lumière diffuse pour les modules de caméra (50).

2. Ensemble de caméra stéréo selon la revendication 1, **caractérisé en ce que** le support (40) présente deux parties de support séparées l'une de l'autre, qui reprennent chacune l'un des modules de caméra (50) et qui sont collées sur le côté intérieur (11) de la vitre (10) du pare-brise à distance latérale prédéterminée l'une par rapport à l'autre, les parties de support assurant l'étanchéité de l'espace (47) pour pré-lentilles entre les modules de caméra (50) et la vitre (10) du pare-brise.

3. Ensemble de caméra stéréo selon la revendication 1, **caractérisé en ce que** le support est réalisé en une seule pièce et présente deux parties de réception (42) qui reprennent chacune l'un des modules de caméra (50) et qui sont reliées rigidement l'une à l'autre par une traverse (43).

4. Ensemble de caméra stéréo selon l'une des revendications précédentes, **caractérisé en ce que** le support (40) présente des logements fermés (42) dans lesquels une découpe (44) par exemple circulaire ou rectangulaire est formée pour reprendre en toute sécurité les modules de caméra (50).

5. Ensemble de caméra stéréo selon l'une des revendications précédentes, **caractérisé en ce qu'**il présente une étanchéité à longue durée de vie de l'espace (47) pour pré-lentilles vis-à-vis des particules et de l'humidité.

6. Ensemble de caméra stéréo selon l'une des revendications précédentes, **caractérisé en ce que** les modules de caméra (50) sont raccordés l'un à l'autre par un support de montage formé séparément du support (40).

7. Ensemble de caméra stéréo selon l'une des revendications précédentes, **caractérisé en ce que** le matériau du support (40), de préférence une matière synthétique, présente un coefficient de dilatation thermique qui correspond essentiellement au coefficient de dilatation thermique de la vitre (10) du pare-brise.

8. Ensemble de caméra stéréo selon l'une des revendications précédentes, **caractérisé en ce que** des surfaces de pose du support (40) sur le côté intérieur (11) de la vitre (10) du pare-brise sont rendues hermétiques, de préférence par un joint d'étanchéité à élasticité permanente.

9. Ensemble de caméra stéréo selon l'une des revendications précédentes, **caractérisé en ce qu'**un dispositif d'équilibrage de pression qui équilibre la pression entre les espaces (47) pour pré-lentilles et l'espace environnant, de préférence la partie (35) occupée par la caméra, est prévu dans le support (40).

10. Ensemble de caméra stéréo selon la revendication 9, **caractérisé en ce que** des parties semi-perméables, de préférence constituées d'un matériau perméable à l'air et imperméable à l'humidité, par exemple un matériau textile à microfibres, sont prévues dans le dispositif d'équilibrage de pression.

11. Ensemble de caméra stéréo selon l'une des revendications précédentes, **caractérisé en ce qu'**une carte de circuit (60) qui enregistre les données et alimente en courant les modules de caméra (50) est prévue sur le côté arrière des modules de caméra (50).

12. Ensemble de caméra stéréo selon l'une des revendications précédentes, **caractérisé en ce qu'**un conducteur de données conduisant vers un dispositif de commande installé séparément du support (40) est prévu depuis les modules de caméra (50) ou la carte de circuit (60).

13. Ensemble de caméra stéréo selon l'une des revendications précédentes, **caractérisé en ce qu'**un mécanisme d'encliquetage qui reprend en position fixe les modules de caméra (50), de préférence la partie formant l'objectif des modules de caméra (50) est prévu dans le support (40).

14. Procédé de fabrication d'un ensemble de caméra stéréo selon l'une des revendications précédentes, **caractérisé en ce que**
les modules de caméra (50) sont insérés dans le support (40) et
le support (40) est fixé par collage sur des zones adhésives (45) prévues sur le côté intérieur (11) de la vitre (10) du pare-brise, de manière à former entre les modules de caméra (50) et la vitre (10) du pare-brise des espaces (47) pour pré-lentilles, les zones adhésives entourant les espaces (47) pour pré-lentilles,
les zones adhésives (45) s'étendant en anneau autour des espaces (47) pour pré-lentilles et le support (40) recouvrant les modules de caméra (50) vers le bas et les côtés pour ainsi faire écran à la lumière diffuse pour les modules de caméra (50).
